# EUROPÄISCHE PATENTANMELDUNG

(11) **EP 3 501 301 A1**
(43) Veröffentlichungstag der Anmeldung: **26.06.2019**
(21) Anmeldenummer: 18212168.1
(22) Anmeldetag: 13.12.2018
(51) Int. Cl.: A24C 5/345

(54) **AUFNAHMEEINRICHTUNG FÜR STABFÖRMIGE ARTIKEL DER TABAK VERARBEITENDEN INDUSTRIE**

(30) Priorität: 20.12.2017 DE 102017130676
(71) Anmelder: Hauni Maschinenbau GmbH, 21033 Hamburg (DE)
(72) Erfinder: DEPPE, Oliver, 22119 Hamburg (DE)
(74) Vertreter: Seemann & Partner Patentanwälte mbB

(57) **Zusammenfassung**

Die Erfindung betrifft u.a. eine Trommelanordnung zum queraxialen Fördern von stabförmigen Artikeln der Tabak verarbeitenden Industrie, insbesondere Zigaretten oder Filterzigaretten oder Filterstücke, mit mehreren Fördertrommeln zum queraxialen Fördern der stabförmigen Artikel, wobei die Fördertrommeln jeweils um eine Rotationsachse rotierbar sind oder rotierend angetrieben werden. Hierbei ist wenigstens eine Fördertrommel (119, 141, 142) vorgesehen, an der eine, vorzugsweise stichprobenartige, Entnahme von stabförmigen Artikeln ausgeführt wird oder ausführbar ist, wobei unterhalb der Fördertrommel (119, 141, 142) zur Entnahme von stabförmigen Artikeln und/oder unterhalb der Fördertrommeln eine, vorzugsweise linear, bewegbare, wenigstens eine Aufnahmeschale (210, 220) aufweisende Aufnahmeeinrichtung für zu entnehmende oder entnommene stabförmige Artikel vorgesehen ist, wobei die Bewegungsrichtung der Aufnahmeeinrichtung in einer Ebene liegt, die senkrecht zu den Rotationsachsen der Fördertrommeln ausgebildet ist.

## Beschreibung

Die Erfindung betrifft eine Trommelanordnung zum queraxialen Fördern von stabförmigen Artikeln der Tabak verarbeitenden Industrie, insbesondere Zigaretten oder Filterzigaretten oder Filterstücke, mit mehreren Fördertrommeln zum queraxialen Fördern der stabförmigen Artikel. Ferner betrifft die Erfindung eine Trommelmaschine der Tabak verarbeitenden Industrie, insbesondere Filteransetzmaschine.

Es ist bekannt, dass bei der Herstellung von stabförmigen Artikeln der Tabak verarbeitenden Industrie, wie z.B. Filterzigaretten oder Filterstäbe oder Heat-Not-Burn-Produkte, während der Herstellung stichprobenartig mehrere stabförmige Artikel aus dem Produktionsprozess entnommen werden. Beispielsweise weist eine Filteransetzmaschine mehrere Fördertrommeln auf, wobei für eine Probennahme die queraxial geförderten stabförmigen Artikel von einer Fördertrommel in eine darunterliegende Auffangschale abgeblasen werden. Anschließend werden die in der Auffangschale befindlichen stabförmigen Artikel für die Qualitätsprüfung aus der Auffangschale entnommen.

Eine Vorrichtung zum Entnehmen von stabförmigen Proben an einer Maschine der Tabak verarbeitenden Industrie ist beispielsweise im Prior Art Journal 2014, Nr. 17, Seite 110 f., beschrieben.

Ausgehend von diesem Stand der Technik besteht die Aufgabe der Erfindung darin, auf einfache und sichere Weise eine Probenentnahme von stabförmigen Artikeln an einer Trommelmaschine der Tabak verarbeitenden Industrie zu ermöglichen.

Gelöst wird diese Aufgabe durch eine Trommelanordnung zum queraxialen Fördern von stabförmigen Artikeln der Tabak verarbeitenden Industrie, insbesondere Zigaretten oder Filterzigaretten oder Filterstücke, mit mehreren Fördertrommeln zum queraxialen Fördern der stabförmigen Artikel, wobei die Fördertrommeln jeweils um eine Rotationsachse rotierbar sind oder rotierend angetrieben werden, wobei wenigstens eine Fördertrommel vorgesehen ist, an der eine, vorzugsweise stichprobenartige, Entnahme von stabförmigen Artikeln ausgeführt wird oder ausführbar ist, wobei unterhalb der Fördertrommel zur Entnahme von stabförmigen Artikeln und/oder unterhalb der Fördertrommeln eine, vorzugsweise linear, bewegbare, wenigstens eine Aufnahmeschale aufweisende Aufnahmeeinrichtung für zu entnehmende oder entnommene stabförmige Artikel vorgesehen ist, wobei die Bewegungsrichtung der Aufnahmeeinrichtung in einer Ebene liegt, die senkrecht zu den Rotationsachsen der Fördertrommeln ausgebildet ist.

Die Erfindung beruht auf dem Gedanken, dass unterhalb der Fördertrommein der Trommelanordnung die wenigstens eine Aufnahmeschale aufweisende Aufnahmeeinrichtung bewegt wird, wobei die Aufnahmeeinrichtung unterhalb der Trommeln quer zur Maschine, d.h. in einer Ebene bewegt wird, die senkrecht zu den Rotationsachsen der Fördertrommel ausgebildet ist. Hierdurch wird die Aufnahmeeinrichtung mit der Aufnahmeschale für die zu entnehmenden oder entnommenen stabförmigen Artikel zu einer Fördertrommel bewegt, an der stichprobenartig einige stabförmige Artikel von der Fördertrommel entnommen werden und anschließend in der Aufnahmeschale aufgenommen werden.

Beispielsweise werden stichprobenartig stabförmige Artikel durch Abblasen der stabförmigen Artikel aus den Aufnahmemulden von der Fördertrommel in die Aufnahmeschale bewegt.

Darüber hinaus ist es auch möglich, dass an einer Fördertrommel zusätzlich eine sogenannte Entnahmetrommel angeordnet ist, die während des Herstellungsprozesses mitrotiert und für einen kurzen Zeitraum mehrere stabförmige Artikel von einer oder der Fördertrommel entnimmt und anschließend zu der Aufnahmeschale weiterfördert. Nach der Aufnahme von mehreren stabförmigen Artikeln wird die Aufnahmeeinrichtung aus der Aufnahmeposition in eine andere Position unterhalb der Fördertrommeln bewegt. Vorzugsweise wird hierbei die Aufnahmeeinrichtung in eine Parkposition bewegt, in der die stabförmigen Artikel aus der Aufnahmeschale oder die Aufnahmeschale mit den stabförmigen Artikeln entnommen werden. Dadurch kann beispielsweise das Bedienpersonal auf einfache Weise die stabförmigen Artikel aus der Aufnahmeschale für die Qualitätsprüfung entnehmen.

Sind an einer Trommelanordnung mehrere Entnahmestellen für stichprobenartige Entnahmen vorgesehen, so ist es mittels der erfindungsgemäßen bewegbaren Aufnahmeeinrichtung möglich, dass die Aufnahmeeinrichtung mit der oder den Aufnahmeschalen zu den einzelnen Entnahmestellen bewegt wird, so dass an den verschiedenen Entnahmestellen stichprobenartig stabförmige Artikel in der oder den Schalen aufgenommen werden. Hierdurch ergibt sich Vereinfachung und eine Kostenersparnis, da nur mit einer Aufnahmeeinrichtung bzw. nur mit einer Aufnahmeschale eine stichprobenartige Entnahme von stabförmigen Artikeln an verschiedenen Stellen erfolgen kann.

Darüber hinaus ist in einer Weiterbildung vorgesehen, dass für die Aufnahmeeinrichtung eine Führungseinrichtung vorgesehen ist, wobei entlang der Führungseinrichtung die Aufnahmeeinrichtung, vorzugsweise linear, bewegbar ist oder bewegt wird.

Insbesondere ist die Führungseinrichtung für die Aufnahmeeinrichtung als Führungsschiene ausgebildet. Insbesondere ist die Führungsschiene als lineare Führungsschiene ausgebildet, so dass entlang der Führungsschiene die Aufnahmeeinrichtung mit der wenigstens einen Aufnahmeschale unterhalb der Fördertrommeln und entlang der Maschine bewegt wird.

Außerdem ist in einer bevorzugten Ausführungsform der Trommelanordnung weiter vorgesehen, dass die Aufnahmeeinrichtung zwei oder wenigstens zwei Aufnahmeschalen für die zu entnehmenden oder entnommenen stabförmigen Artikel aufweist. Hierdurch ist es möglich, dass an verschiedenen Entnahmestellen bzw. verschiedenen Fördertrommeln jeweils eine Entnahme stattfindet, wobei jeder Entnahmestelle jeweils eine entsprechende Aufnahmeschale zugeordnet wird, die entsprechend mit stabförmigen Artikeln stichprobenartig befüllt wird.

Darüber hinaus zeichnet sich die Trommelanordnung in einer Ausgestaltung dadurch aus, dass für die Aufnahmeeinrichtung ein, vorzugsweise motorischer, Antrieb vorgesehen ist, wobei insbesondere eine Steuervorrichtung für den Antrieb der Aufnahmeeinrichtung vorgesehen ist. Hierdurch wird ein automatischer Betrieb für die Probenentnahme von stabförmigen Artikeln an einer Trommelanordnung bzw. Trommelmaschine ermöglicht. Darüber hinaus ist es mittels der Steuervorrichtung für den Antrieb der Aufnahmeeinrichtung möglich, positionsgenau die Aufnahmeeinrichtung unterhalb einer Entnahmestelle anzuordnen, wodurch eine zuverlässige Entnahme von stabförmigen Artikeln für eine Qualitätskontrolle möglich ist.

Gemäß einer bevorzugten Ausführungsform ist weiterhin vorgesehen, dass die Aufnahmeeinrichtung einen, vorzugsweise bewegbaren, Deckel für die wenigstens eine Aufnahmeschale oder die wenigstens zwei Aufnahmeschalen aufweist. Hierbei ist es möglich, dass nach einer Entnahme und Aufnahme von stabförmigen Artikeln in einer Aufnahmeschale der Deckel oberhalb der Aufnahmeschale angeordnet wird, wodurch keine weiteren stabförmigen Artikel in die Aufnahmeschale gelangen. Dadurch wird die Durchführung von Qualitätsprüfungen signifikant erhöht, da dadurch keine querfliegenden stabförmigen Artikel in die Aufnahmeschale nach der Probenentnahme gelangen. Mittels des bewegbaren Deckels ist es dabei möglich, die Aufnahmeschale für eine Probenentnahme zu öffnen bzw. nach einer Probenentnahme entsprechend abzudecken oder zu schließen.

Dazu ist vorteilhafterweise in einer Weiterbildung vorgesehen, dass der Deckel für die Aufnahmeschale oder für die Aufnahmeschalen entlang einer weiteren Führungsschiene für den Deckel oder entlang der Führungsschiene für die Aufnahmeeinrichtung bewegbar ist.

Insbesondere ist für den Deckel ein weiterer, vorzugsweise motorischer, Antrieb vorgesehen, wobei insbesondere eine Steuervorrichtung für den Antrieb des Deckels vorgesehen ist. Dadurch ist es möglich, den Deckel in Abhängigkeit der Position der Aufnahmeeinrichtung entsprechend zu positionieren und zu verfahren. Insbesondere liegt die Bewegungsrichtung des Deckels in einer Ebene, die senkrecht, insbesondere horizontal, zu den Rotationsachsen der Fördertrommel ausgebildet ist. Nach einer Probeentnahme und Aufnahme von stabförmigen Artikeln in der Aufnahmeschale wird die Aufnahmeschale durch Verfahren des Deckels geschlossen, wobei anschließend die Aufnahmeeinrichtung mit der Aufnahmeschale und dem Deckel gemeinsam bewegt wird. Insbesondere ist für die Aufnahmeeinrichtung bzw. die Aufnahmeschale und den Deckel eine gemeinsame Führungsschiene vorgesehen.

Außerdem zeichnet sich die Trommelanordnung dadurch aus, dass an einer Fördertrommel und/oder an einer Entnahmetrommel der Trommelanordnung ein, vorzugsweise unterhalb der Fördertrommel und/oder unterhalb der Entnahmetrommel angeordneter, Zwischenspeicher für von der Fördertrommel entnommene oder entnehmbare stabförmige Artikel vorgesehen ist, wobei aus dem Zwischenspeicher stabförmige Artikel in die wenigstens eine Aufnahmeschale der Aufnahmeeinrichtung abgegeben werden oder abgebbar sind.

Ferner wird die Aufgabe gelöst durch eine Trommelmaschine der Tabak verarbeitenden Industrie, insbesondere Filteransetzmaschine, die mit einer voranstehend beschriebenen erfindungsgemäßen Trommelanordnung ausgebildet ist. Zur Vermeidung von Wiederholungen wird auf die obigen Ausführungen ausdrücklich verwiesen.

Vorzugsweise ist bei der Trommelmaschine dazu vorgesehen, dass für die Trommelanordnung eine Verschutzung vorgesehen ist, wobei die Trommelanordnung hinter der Verschutzung angeordnet ist. Insbesondere ist die Verschutzung mit einem oder mehreren Fenstern aus Glas ausgebildet.

In einer bevorzugten Ausführungsform der Trommelanordnung ist weiter vorgesehen, dass für die Aufnahmeeinrichtung ein Parkplatz vorgesehen ist, so dass nach der Aufnahme von stabförmigen Artikeln in wenigstens eine Aufnahmeschale der Aufnahmeeinrichtung in einer Aufnahmeposition die Aufnahmeeinrichtung von der Aufnahmeposition in eine Parkposition an dem Parkplatz bewegbar ist oder bewegt wird.

Darüber hinaus ist es bei der Trommelmaschine vorteilhaft, dass die Verschutzung im Bereich der Parkposition der Aufnahmeeinrichtung eine, vorzugsweise verschließbare, Öffnung aufweist. Bei Anordnung der Aufnahmeeinrichtung in der Parkposition ist es somit möglich, durch die Öffnung in der Verschutzung die Aufnahmeschale mit den stabförmigen Artikeln oder die stabförmigen Artikel aus der Aufnahmeschale zu entnehmen. Um die Öffnung der Verschutzung zu schließen, ist hierbei eine Klappe oder eine Tür oder ein Deckel vorzugsweise vorgesehen, wodurch auf einfache Weise die Aufnahmeschale in der Parkposition zugänglich ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: schematisch eine Filteransetzmaschine zum Herstellen von Filterzigaretten in einer Vorderansicht;
- Fig. 1b: schematisch eine Draufsicht auf eine Aufnahmeeinrichtung für stabförmige Artikel für die in Fig. 1a gezeigte Filteransetzmaschine;
- Fig. 2: eine Querschnittsansicht einer Aufnahmeschale einer Aufnahmeeinrichtung für stabförmige Artikel.

In den Zeichnungen sind jeweils gleiche oder gleichartige Elemente und/oder Teile mit denselben Bezugsziffern versehen, so dass von einer erneuten Vorstellung jeweils abgesehen wird.

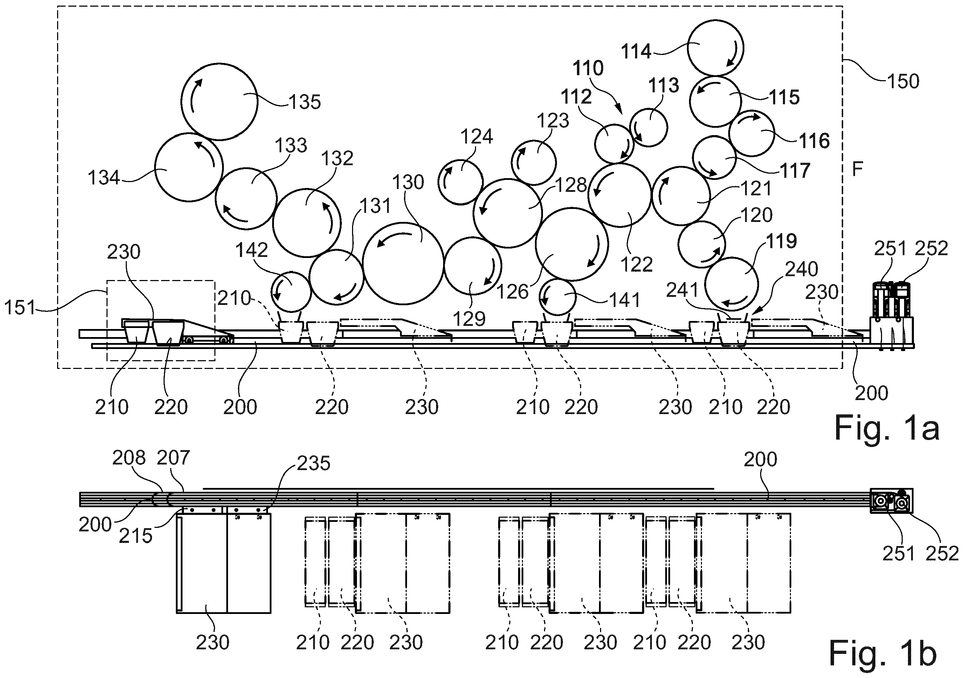

In Fig. 1 ist eine Filteransetzmaschine F in einer Vorderansicht ausschnittsweise schematisch dargestellt, wobei die Filteransetzmaschine F über eine Trommelanordnung zur Zuführung von Tabakstöcken von einer hier nicht eingezeichneten Zigarettenstrangmaschine Tabakstöcke doppelter Gebrauchslänge empfängt. Nach der Übergabe der doppeltlangen Tabakstöcke von der Zigarettenstrangmaschine an eine Übernahmetrommel werden die doppeltlangen Tabakstöcke queraxial gefördert und an eine Schneidtrommel übergeben, auf der die doppeltlangen Tabakstöcke mittels eines an der Schneidtrommel angeordneten Schneidmessers in einfachlange Tabakstöcke geschnitten werden.

Von der Schneidtrommel werden die Tabakstöcke einfacher Gebrauchslänge an eine Fördertrommel 119 übergeben. Anschließend werden die längsaxial beabstandeten Tabakstockpaare zu einer Spreiztrommel 120 transportiert, auf der die geschnittenen Tabakstockpaare längsaxial voneinander beabstandet bzw. gespreizt werden. Danach werden die Tabakstockpaare von der Spreiztrommel 120 an eine Zusammenstelltrommel 121 übergeben.

Zu der Zusammenstelltrommel 121 werden außerdem über eine weitere Trommelanordnung einer Filterzuführeinrichtung doppeltlange Filterstopfen gefördert, die jeweils zwischen zwei längsaxial beabstandete Tabakstöcke eingefügt werden. Hierdurch wird auf der Zusammenstelltrommel 121 eine Folge von queraxial hintereinander angeordneten Tabakstock-Filterstopfen-Tabackstock-Gruppen gebildet.

Um die doppeltlangen Filterstopfen zwischen die längsaxial beabstandeten Tabakstockpaare auf der Zusammenstelltrommel 121 einzulegen bzw. anzuordnen, verfügt die Trommelanordnung der Filterzuführeinrichtung über eine Entnahmetrommel 114, mittels der Filterstäbe aus einem (hier nicht dargestellten) Filterstabmagazin entnommen werden und unter Verwendung von an oder im Bereich der Entnahmetrommel 114 angeordneten, hier nicht dargestellten, Schneidmesser in Filterstopfen doppelter Länge geschnitten werden. Anschließend werden die Filterstopfen doppelter Länge an eine Staffeltrommel 115 und eine nachfolgende Schiebetrommel 116 übergeben. Die gestaffelten Filterstopfen doppelter Länge werden anschließend von der Schiebetrommel 116 an eine nachfolgende Einlegetrommel 117, die auch als Beschleunigertrommel ausgebildet sein kann, übergeben und queraxial zu der Zusammenstelltrommel 121 gefördert, so dass auf der Zusammenstelltrommel 121 Artikelgruppen aus Tabakstock-Filterstopfen-Tabakstock-Gruppen gebildet werden.

Die zusammengestellten Artikelgruppen aus Tabakstock-Filterstopfen-Tabakstock-Gruppen werden als stabförmige Artikel doppelter Länge von der Zusammenstelltrommel 121 anschließend an eine nachfolgende Fördertrommel 122 übergeben. Gleichzeitig werden von einem Belagapparat 110 einer Belagpapierzufuhreinrichtung Belagblättchen den zusammengestellten Tabakstock-Filterstopfen-Tabakstock-Gruppen synchron zugeführt. Hierbei wird ein beleimter und geförderter, hier nicht dargestellter, Belagpapierstreifen im Belagapparat 110 auf einer Saugwalze 112 von Messern einer Messerwalze 113 in Belagblättchen bzw. Verbindungsblättchen geschnitten. Die geschnittenen Verbindungsblättchen werden jeweils an eine Artikelgruppe bzw. stabförmige Artikel doppelter Länge auf der Fördertrommel 122 übergeben bzw. angeheftet.

Nach dem Anheften der geschnittenen und der einzelnen Verbindungsblättchen an jeweils eine Artikelgruppe werden die Artikelgruppen weiter zu einer Rolltrommel 126, an der eine (hier nicht dargestellte) Rolleinrichtung angeordnet ist, transportiert, mittels der die Verbindungsblättchen vollständig um die stabförmigen Artikel, insbesondere Tabakstock-Filterstopfen-Tabakstock-Gruppen im Bereich der Filterstopfen herumgewickelt werden. In einer Ausgestaltung besteht die Rolleinrichtung aus einem Stegrad, einer Rollhand mit einer Rollfläche und ausgangsseitig einer Rollwalze, wobei die Rollfläche und die Rolltrommel 126 einen Rollkanal bilden, in dem die Artikelgruppen mit dem Verbindungsblättchen umwickelt werden, wodurch doppeltlange Filterzigaretten gebildet werden. Die doppeltlangen Filterzigaretten bzw. stabförmigen Artikel doppelter Länge werden nachfolgend an eine Fördertrommel 128 übergeben.

Auf ihrem queraxialen Förderweg werden die gebildeten umhüllten stabförmigen Artikel doppelter Länge von der Fördertrommel 128 zunächst an eine an der Fördertrommel 128 angeordnete weitere Fördertrommel 123 übergeben, so dass die stabförmigen Artikel doppelter Länge auf der Fördertrommel 123 zu einer (hier nicht dargestellten) Lasereinrichtung gefördert werden. Mittels der Lasereinrichtung an der Fördertrommel 123 wird ein erstes Perforationsmuster in die Umhüllung der stabförmigen Artikel eingebracht. Anschließend werden nach der Perforation der stabförmigen Artikel diese von der Fördertrommel 123 zurück zur Fördertrommel 128 gefördert und an diese abgegeben, so dass nach der Abgabe der stabförmigen Artikel mit dem ersten Perforationsmuster die stabförmigen Artikel zu einer zweiten an der Fördertrommel 128 angeordneten Fördertrommel 124 gefördert werden und an diese übergeben werden.

Die von der Fördertrommel 124 aufgenommenen Tabakstock-Filterstopfen-Tabakstock-Gruppen mit einem ersten Perforationsmuster werden auf der Fördertrommel 124 zu einer zweiten (hier nicht dargestellten) Perforationseinrichtung geführt bzw. gefördert, so dass mittels der Perforationseinrichtung ein zweites Perforationsmuster in die Umhüllung der stabförmigen Artikel eingebracht wird. Anschließend werden die mit zwei Perforationsmustern versehenen stabförmigen Artikel von der Fördertrommel 124 zurück zur Fördertrommel 128 gefördert und an diese übergeben.

Die doppeltlangen Filterzigaretten mit zwei Perforationsmustern werden nachfolgend an eine als Schneidtrommel ausgebildete Fördertrommel 129 übergeben und für den weiteren Bearbeitungsprozess an der Filteransetzmaschine F bereitgestellt. Zum Schneiden der doppellangen Filterzigaretten ist an der Schneidtrommel 129 ein (hier nicht dargestelltes) Schneidmesser angeordnet, welches aus den doppellangen Filterzigaretten durch einen mittigen Trennschnitt Filterzigaretten einfacher Länge, d.h. stabförmige Artikel einfacher Länge, herstellt.

Von der Fördertrommel 129 werden die beiden gebildeten Reihen mit queraxial hintereinander angeordneten Filterzigaretten einfacher Gebrauchslänge anschließend an eine Trommelanordnung mit Fördertrommeln 131, 132, 133, 134, 135 übergeben. Hierbei werden die stabförmigen Artikel einfacher Gebrauchslänge queraxial auf den Fördertrommeln 131 bis 135 gefördert.

Im Rahmen der Erfindung kann dabei vorgesehen sein, dass an einer der Fördertrommeln eine weitere Perforationseinrichtung angeordnet ist, um die Filterzigaretten einfacher Länge mit einem dritten Perforationsmuster zu versehen. Darüber hinaus können auch an wenigstens einer Fördertrommel Prüforgane angeordnet sein, um die Zigaretten beispielsweise einer Dichtigkeitsprüfung und/oder Kopfendenprüfung und/oder einer Ventilationsprüfung zu unterziehen. Darüber hinaus ist es möglich, dass mittels der Prüforgane eine optische Prüfung der Zigaretten auf den Fördertrommeln durchgeführt wird.

Unterhalb der Trommelanordnung der Fördertrommeln der Filteransetzmaschine F ist eine horizontal ausgerichtete Führungsschiene 200 angeordnet, wobei entlang der Führungsschiene 200 zwei Aufnahmeschalen 210, 220 linear bewegbar bzw. verfahrbar sind. Die Aufnahmeschalen 210, 220 sind über ein Gestell 215 mit der Führungsschiene 200 verbunden.

In Fig. 1b ist eine Draufsicht auf die Führungsschiene 200 mit den Aufnahmeschalen 210, 220 dargestellt. In Fig. 1a und 1b sind gestrichelt verschiedene Positionen der Aufnahmeschalen 210, 220 zur stichprobenartigen Entnahme von stabförmigen Artikeln aus dem Herstellungsprozess an der Filteransetzmaschine F dargestellt, in denen stabförmige Artikel in die Aufnahmeschalen 210, 220 von Fördertrommeln abgegeben werden.

Beispielsweise ist im rechten Bereich von Fig. 1a in der gestrichelten Position die Aufnahmeschale 220 unterhalb der Fördertrommel 119 angeordnet, um von der Fördertrommel 119 an die Spreiztrommel 120 nicht abgegebene Tabakstockpaare aufzunehmen. Hierbei werden für die stichprobenartige Entnahme die Tabakstockpaare von der als Fördertrommel ausgebildeten Fördertrommel 119 nicht an die Spreiztrommel 120 übergeben, sondern verbleiben vielmehr in den Aufnahmemulden der Fördertrommel 119 und werden zur Abgabe in die Aufnahmeschale 220 im Bereich der Aufnahmeschale 220 aus den Aufnahmemulden der Fördertrommel 119 ausgeblasen. Unterhalb der Fördertrommel 119 ist ein trogförmiger Zwischenspeicher 240 vorgesehen, wobei der Zwischenspeicher 240 eine bewegbare Klappe 241 aufweist, so dass bei Anordnung der Aufnahmeschale 210 oder der Aufnahmeschale 220 unterhalb des Zwischenspeichers 240 die Klappe 241 geöffnet wird und somit die im Zwischenspeicher 240 angeordneten bzw. aufgenommenen stabförmigen Artikel, insbesondere Tabakstockpaare, aus dem Zwischenspeicher 240 in eine Aufnahmeschale 210 oder 220 der horizontal bewegbaren Aufnahmeeinrichtung abgegeben werden.

Um beispielsweise weitere stichprobenartig doppeltlange Tabakstock-Filterstopfen-Tabakstock-Gruppen aus dem queraxialen Herstellungs- und Förderungsprozess an der Filteransetzmaschine F zu entnehmen, ist an der Fördertrommel 126 eine Entnahmetrommel 141 angeordnet, so dass mittels der Entnahmetrommel 141 die stabförmigen Artikel von der Fördertrommel 126 stichprobenartig entnommen werden und in eine unterhalb der Entnahmetrommel 141 angeordnete Aufnahmeschale 210 oder 220 abgegeben werden. Bei dem in Fig. 1a dargestellten Beispiel ist eine Aufnahmeposition der Aufnahmeschale 220 unterhalb der Entnahmetrommel 141 gestrichelt eingezeichnet.

Darüber hinaus ist an der Fördertrommel 131 zur stichprobenartigen Entnahme von geschnittenen und perforierten Filterzigaretten einfacher Gebrauchslänge an der Fördertrommel 131 eine Entnahmetrommel 142 angeordnet, mittels der stichprobenartig die Filterzigaretten entnommen werden und in die unterhalb der Entnahmetrommel 142 angeordnete Aufnahmeschale 210 abgegeben werden. In Fig. 1a ist die gestrichelte Aufnahmeposition der Aufnahmeschale 110 von Filterzigaretten von der Entnahmetrommel 142 schematisch eingezeichnet.

Um die Aufnahmeschalen 210, 220 nach Aufnahme von stabförmigen Artikeln zu verschließen, ist an der Führungsschiene 200 über eine Aufhängung 235 ein ebenfalls horizontal verfahrbarer Deckel 230 angeordnet. Der Deckel 230 ist hierbei zusammen mit den Aufnahmeschalen 210, 220 entlang der Führungsschiene 200 unterhalb der Trommelanordnung der Filteransetzmaschine F horizontal bewegbar. Um die Aufnahmeschalen 210, 220 sowie den Deckel 230 zu bewegen, sind ein Antrieb 251 für die Aufnahmeschalen 210, 220 sowie ein Antrieb 252 für den Deckel 230 vorgesehen, die beispielsweise unter Verwendung von Riemen mit dem Gestell 215 für die Aufnahmeschalen 210, 220 sowie mit der Aufhängung 235 für den Deckel 230 jeweils verbunden sind. Die Antriebe 251, 252 sind vorzugsweise als elektrische Antriebe ausgebildet, wobei die Antriebe 251, 252 jeweils über eine eigene Steuereinheit verfügen. Dadurch ist es möglich, die Aufnahmeschalen 210, 220 sowie den Deckel 230 unabhängig voneinander entlang der Führungsschiene 220 zu bewegen bzw. zu verfahren.

Die Fördertrommeln der Filteransetzmaschine F weisen Rotationsachsen auf, die senkrecht zu der Zeichenebene in Fig. 1a ausgerichtet sind. Die Fördertrommeln der Filteransetzmaschine F sind hierbei an der Rückwand des Prozeßraums der Filteransetzmaschine F angeordnet. Die Bewegungsrichtung der Aufnahmeschalen 210, 220 sowie des Deckels 230 liegt hierbei in einer horizontalen Ebene unterhalb der Fördertrommeln der Filteransetzmaschine F.

In Fig. 1a ist ferner schematisch eine Verschutzung 150 eingezeichnet, hinter der die Fördertrommeln der Filteransatzmaschine F angeordnet sind, wodurch das Bedienpersonal geschützt ist. Die Verschutzung 150 weist hierbei vorzugsweise einen Rahmen auf, in dem beispielsweise wenigstens ein oder mehrere Glasfenster eingesetzt sind.

Im linken Bereich, in dem die Aufnahmeschalen 210, 220 in einer Parkposition angeordnet sind, weist die Verschutzung 150 eine bewegbare Tür oder Klappe 151 auf, so dass bei Anordnung der Aufnahmeschalen 210, 220 in der Parkposition die Klappe 151 geöffnet werden kann, wodurch die in den Aufnahmeschalen 210, 220 aufgenommenen stabförmigen Artikel aus den Aufnahmeschalen 210, 220 entnommen werden können. In dieser Position ist es ebenfalls möglich, die Aufnahmeschalen 210, 220 für die Qualitätsprüfung zusammen mit den darin angeordneten stabförmigen Artikeln komplett zu entnehmen.

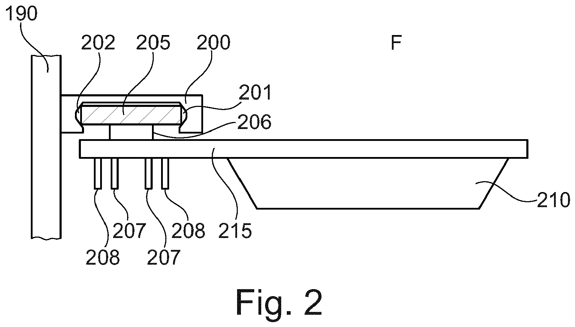

In Fig. 2 ist schematisch ein Querschnitt durch die Führungsschiene 200 gezeigt, wobei an der Führungsschiene 200 mittels des Gestells 215 die Aufnahmeschale 210 angeordnet ist. Die Führungsschiene 200 ist hierbei an der Unterseite offen und weist zur Aufnahme von Laufrollen 205 an der Innenseite nutförmige oder V-förmige Laufflächen 201, 202 auf, in denen die Laufrollen 205 des Gestells 215 für die Aufnahmeschalen 210, 220 und für die Laufrollen der Aufhängung 235 des Deckels 230 angeordnet sind.

In Fig. 2 ist eine Laufrolle 205 eingezeichnet, an der die Aufnahmeschale 210 über einen Schlitten 206 des Gestells 215 mit der Laufrolle 205 verbunden ist. Die Führungsschiene 200 ist hierbei an einer Platte 190 der Rückwand des Prozeßraums der Filteransetzmaschine F angeordnet. An der Unterseite des Schlittens 206 verlaufen entlang der Führungsschiene 200 und senkrecht zur Zeichenebene Riemen 207, 208, wobei die Riemen 208, 207 insbesondere als endlose Riemen oder quasi-endlose Riemen ausgebildet sind. Hierbei ist der Riemen 207 von dem Riemen 208 umgeben. Der Riemen 208 ist mit dem Antrieb 252 für den Deckel 230 verbunden, während der Riemen 207 mit dem Antrieb 251 für die Aufnahmeschalen 210, 200 (vgl. Fig. 1a, 1b) verbunden ist. Ferner sind der Riemen 208 mit dem Schlitten 206 für die Aufnahmeschale 210 und der Riemen 207 mit dem Deckel 230 verbunden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuqszeichenliste

- 110: Belagapparat
- 112: Saugwalze
- 113: Messerwalze
- 114: Entnahmetrommel
- 115: Staffeltrommel
- 116: Schiebetrommel
- 117: Einlegetrommel
- 119: Fördertrommel
- 120: Spreiztrommel
- 121: Zusammenstelltrommel
- 122: Fördertrommel
- 123: Fördertrommel
- 124: Fördertrommel
- 126: Rolltrommel
- 128: Fördertrommel
- 129: Schneidtrommel
- 130: Fördertrommel
- 131: Fördertrommel
- 132: Fördertrommel
- 133: Fördertrommel
- 134: Fördertrommel
- 135: Fördertrommel
- 141: Entnahmetrommel
- 142: Entnahmetrommel
- 150: Verschutzung
- 151: Klappe
- 190: Platte
- 200: Führungsschiene
- 201: Lauffläche
- 202: Lauffläche
- 205: Laufrolle
- 206: Schlitten
- 207: Riemen
- 208: Riemen
- 210: Aufnahmeschale
- 215: Gestell
- 220: Aufnahmeschale
- 230: Deckel
- 235: Aufhängung
- 240: Zwischenspeicher
- 241: Klappe
- 251: Antrieb
- 252: Antrieb

- F: Filteransetzmaschine

## Patentansprüche

1. Trommelanordnung zum queraxialen Fördern von stabförmigen Artikeln der Tabak verarbeitenden Industrie, insbesondere Zigaretten oder Filterzigaretten oder Filterstücke, mit mehreren Fördertrommeln zum queraxialen Fördern der stabförmigen Artikel, wobei die Fördertrommeln jeweils um eine Rotationsachse rotierbar sind oder rotierend angetrieben werden, wobei wenigstens eine Fördertrommel (119, 141, 142) vorgesehen ist, an der eine, vorzugsweise stichprobenartige, Entnahme von stabförmigen Artikeln ausgeführt wird oder ausführbar ist, wobei unterhalb der Fördertrommel (119, 141, 142) zur Entnahme von stabförmigen Artikeln und/oder unterhalb der Fördertrommeln eine, vorzugsweise linear, bewegbare, wenigstens eine Aufnahmeschale (210, 220) aufweisende Aufnahmeeinrichtung für zu entnehmende oder entnommene stabförmige Artikel vorgesehen ist, wobei die Bewegungsrichtung der Aufnahmeeinrichtung in einer Ebene liegt, die senkrecht zu den Rotationsachsen der Fördertrommeln ausgebildet ist.

2. Trommelanordnung nach Anspruch 1, **dadurch gekennzeichnet, dass** für die Aufnahmeeinrichtung eine Führungseinrichtung (200) vorgesehen ist, wobei entlang der Führungseinrichtung (200) die Aufnahmeeinrichtung, vorzugsweise linear, bewegbar ist oder bewegt wird.

3. Trommelanordnung nach Anspruch 2, **dadurch gekennzeichnet, dass** die Führungseinrichtung (200) für die Aufnahmeeinrichtung als Führungsschiene (200) ausgebildet ist.

4. Trommelanordnung nach einem der Ansprüche 1 bis 3, **dadurch gekennzeichnet, dass** die Aufnahmeeinrichtung zwei oder wenigstens zwei Aufnahmeschalen (210, 220) für die zu entnehmenden oder entnommenen stabförmigen Artikel aufweist.

5. Trommelanordnung nach einem der Ansprüche 1 bis 4, **dadurch gekennzeichnet, dass** für die Aufnahmeeinrichtung ein, vorzugsweise motorischer, Antrieb (251, 252) vorgesehen ist, wobei insbesondere eine Steuervorrichtung für den Antrieb (251, 252) der Aufnahmeeinrichtung vorgesehen ist.

6. Trommelanordnung nach einem der Ansprüche 1 bis 5, **dadurch gekennzeichnet, dass** die Aufnahmeeinrichtung einen, vorzugsweise bewegbaren, Deckel (230) für die wenigstens eine Aufnahmeschale oder die wenigstens zwei Aufnahmeschalen (210, 220) aufweist.

7. Trommelanordnung nach Anspruch 6, **dadurch gekennzeichnet, dass** der Deckel (230) für eine Aufnahmeschale (210, 220) oder für die Aufnahmeschalen (210, 220) entlang einer weiteren Führungsschiene (200) für den Deckel (230) oder entlang der Führungsschiene (200) für die Aufnahmeeinrichtung bewegbar ist.

8. Trommelanordnung nach Anspruch 6 oder 7, **dadurch gekennzeichnet, dass** für den Deckel (230) ein weiterer, vorzugsweise motorischer, Antrieb (252) vorgesehen ist, wobei insbesondere eine Steuervorrichtung für den Antrieb (252) des Deckels (230) vorgesehen ist.

9. Trommelanordnung nach einem der Ansprüche 1 bis 8, **dadurch gekennzeichnet, dass** an einer Fördertrommel (119) und/oder an einer Entnahmetrommel (141, 142) der Trommelanordnung ein, vorzugsweise unterhalb der Fördertrommel (119) und/oder unterhalb der Entnahmetrommel (141, 142) angeordneter, Zwischenspeicher (240) für von der Fördertrommel (119) entnommene oder entnehmbare stabförmige Artikel vorgesehen ist, wobei aus dem Zwischenspeicher (240) stabförmige Artikel in die wenigstens eine Aufnahmeschale (210, 220) der Aufnahmeeinrichtung abgegeben werden oder abgebbar sind.

10. Trommelmaschine (F) der Tabak verarbeitenden Industrie, insbesondere Filteransetzmaschine, mit einer Trommelanordnung nach einem der Ansprüche 1 bis 9.

11. Trommelmaschine (F) nach Anspruch 10, **dadurch gekennzeichnet, dass** für die Trommelanordnung eine Verschutzung (150) vorgesehen ist, wobei die Trommelanordnung hinter der Verschutzung (150) angeordnet ist.

12. Trommelmaschine (F) nach Anspruch 11, **dadurch gekennzeichnet, dass** für die Aufnahmeeinrichtung ein Parkplatz vorgesehen ist, so dass nach der Aufnahme von stabförmigen Artikeln in wenigstens eine Aufnahmeschale der Aufnahmeeinrichtung in einer Aufnahmeposition die Aufnahmeeinrichtung von der Aufnahmeposition in eine Parkposition an dem Parkplatz bewegbar ist oder bewegt wird.

13. Trommelmaschine (F) nach Anspruch 12, **dadurch gekennzeichnet, dass** die Verschutzung (150) im Bereich der Parkposition der Aufnahmeeinrichtung eine, vorzugsweise verschließbare, Öffnung aufweist.
